# EUROPÄISCHE PATENTANMELDUNG

(11) **EP 0 548 804 A1**
(43) Veröffentlichungstag der Anmeldung: **30.06.1993**
(21) Anmeldenummer: 92121484.7
(22) Anmeldetag: 17.12.1992
(51) Int. Cl.: F16D 55/14

(54) **Scheibenbremse**

(30) Priorität: 20.12.1991 DE 9115869 U
(71) Anmelder: LUCAS INDUSTRIES PUBLIC LIMITED COMPANY, Solihull, West Midlands B91 3TX (GB)
(72) Erfinder: Bach, Christoph, W-5400 Koblenz (DE); Giering,. Wilfried, W-5442 Mendig (DE); Saftig, Christoph, W-5419 Marienhausen (DE)
(74) Vertreter: Goetz, Rupert, Dipl.-Ing.

(57) **Zusammenfassung**

Eine Scheibenbremse mit zumindest einer in einem Bremsgehäuse (12) mit einer Welle (10) umlaufenden Bremsscheibe bzw. Bremslamelle (14, 14'), die mittels zumindest einer axial verschiebbaren Druckplatte (16, 18) in bremsenden Reibeingriff mit in bezug auf das Gehäuse (12) ortsfesten Reibflächen (12') bringbar ist, wobei Bremskraft über Anschläge (B₁, B₂, B₃, B₄) von der Druckplatte (16, 18) in das Gehäuse (12) eingeleitet wird, und mit einem Betätigungselement (32), das die axiale Verschiebung der Druckplatte bewirkt, sieht zur Vermeidung von Anschlaggeräuschen vor, daß zwischen dem Betätigungselement (32) und dem Gehäuse (12) ein Dämpfungselement (40; 40a; 80, 80a; 90) angeordnet ist.

## Beschreibung

Die Erfindung betrifft eine Scheibenbremse mit zumindest einer in einem Bremsgehäuse auf einer Achse umlaufenden Bremsscheibe oder Bremslamelle, die mittels zumindest einer axial verschiebbaren Druckplatte in bremsenden Reibeingriff mit in bezug auf das Gehäuse ortsfesten Reibflächen bringbar ist, wobei Bremskraft über Anschläge von der oder den Druckplatten in das Gehäuse eingeleitet wird, und mit einem Betätigungselement, das eine axiale Verschiebung der Druckplatte(n) bewirkt.

Insbesondere betrifft die Erfindung eine sogenannte Vollbelagscheibenbremse. Solche Bremsen werden vorzugsweise bei Traktoren und anderen landwirtschaftlichen Maschinen eingesetzt sowie bei in schwerem Gelände verwendeten Nutzfahrzeugen.

Solche Vollbelag-Scheibenbremsen sind z.B. aus der DE 21 04 072 C1 bekannt.

Eine typische Scheibenbremse der hier in Rede stehenden Art weist ein Gehäuse auf, durch welches sich die abzubremsende Welle erstreckt. Das Gehäuse ist ortsfest am Fahrzeug montiert und nimmt die Bremskräfte auf. An der abzubremsenden Welle sind üblicherweise zwei (oder mehr) Lamellen so befestigt, daß zumindest eine begrenzte Axialbewegung der Lamellen möglich ist, während die Lamellen in Umfangsrichtung z.B. über eine Nut/Feder-Verbindung so verbunden sind, daß Drehkräfte von den Lamellen auf die abzubremsende Welle übertragbar sind.

Weiterhin ist bei der üblichen Bauart einer Vollbelag-Scheibenbremse in dem Gehäuse zumindest ein Druckplatten-Paar angeordnet, welches in axialer Richtung auseinanderspreizbar ist und dabei an den Lamellen befestigte Reibbeläge in bremsenden Reibeingriff mit zugeordneten Reibflächen bringt, die zumindest im Bremszustand ortsfest in bezug auf das Gehäuse sind, so daß über die Reibbeläge eine Bremskraft von der abzubremsenden Welle in das Gehäuse der Bremse und somit in das Fahrzeug eingeleitet wird. All dies ist Stand der Technik.

Üblicherweise werden im Stand der Technik die Druckplatten so im Gehäuse geführt, daß sie über eine begrenzte Winkelstrecke (z.B. kleiner als 20°) um die Achse der abzubremsenden Welle drehbar sind. Dabei sind die Druckplatten auf (z.B. drei) Vorsprüngen im Gehäuse konzentrisch in bezug auf die Welle geführt. Aus der DE 16 30 079 C1 ist es bekannt, dabei auf der Führungsfläche ein Schwingmetall-Element anzuordnen, um beim axialen Spreizen der Druckplatten an den Führungsflächen der Gehäusevorsprünge auftretende, in axialer Richtung wirkende innere Reibkräfte zu vermeiden. Hierzu ist dort ergänzend ebenfalls vorgeschlagen, auch Anschlagflächen an den Druckplatten mit einem derartigen Schwingelement zu versehen. Die dort vorgesehenen "Schwingelemente" haben aber ausschließlich den Zweck, Reibkräfte beim Bewegen der Druckplatten zu reduzieren, nicht aber den Zweck, das harte Aufeinanderprallen der Anschläge beim Bremsen abzudämpfen. Dementsprechend sind bei der DE 16 30 079 C1 die "Schwingelemente", die insbesondere in Form von Schichten mit besonderen Gleiteigenschaften ausgebildet sein können, bei jeder Stufe einer Relativbewegung zwischen den Druckplatten und dem Gehäuse wirksam.

Der vorliegenden Erfindung liegt ein anderes Problem zugrunde: Wie vorstehend bereits erläutert ist, sind an den Druckplatten der Scheibenbremse Nasen befestigt, die beim Bremsen aufgrund der Reibkräfte in Umfangsrichtung bewegt werden und dabei gegen Anschläge stoßen, die fest mit dem Gehäuse der Bremse verbunden sind, so daß durch den Druck der Vorsprünge auf die Anschläge die Bremskraft in das Gehäuse eingeleitet wird. Bei diesem Anschlagen der Vorsprünge gegen die Anschläge werden Geräusche verursacht, welche den Fahrer des Fahrzeuges irritieren können.

Aufgabe der Erfindung ist es, eine Scheibenbremse der eingangs genannten Art derart auszubilden, daß bei ihrer Betätigung harte Anschlaggeräusche reduziert sind, wobei eine lange Dauerhaltbarkeit der Scheibenbremse gewährleistet sein soll.

Erfindungsgemäß wird diese Aufgabe dadurch gelöst, daß zwischen dem Betätigungselement und dem Gehäuse ein Dämpfungselement angeordnet ist.

Bevorzugt ist vorgesehen, daß das Betätigungselement als Keil ausgebildet ist, der zwei Druckplatten gegensinnig zueinander verdreht.

Gemäß einer weiteren bevorzugten Ausgestaltung der Erfindung ist vorgesehen, daß der Keil bei einer Verschiebung der Druckplatte in bezug auf die Achse eine radiale Bewegung ausführt und daß das Dämpfungselement den Keil gegen eine Bewegung in Umfangsrichtung gefedert abstützt.

Besondere Ausgestaltungen des Dämpfungselementes sind in den Unteransprüchen beschrieben.

Nachfolgend werden Ausführungsbeispiele der Erfindung anhand der Zeichnung näher erläutert. Es zeigt:
- Fig.1: schematisch einen Schnitt durch eine Vollbelag-Scheibenbremse entlang der Achse einer abzubremsenden Welle;
- Fig.2: eine schematische Darstellung der hier interessierenden Teile einer Vollbelag-Scheibenbremse in unbetätigtem Zustand;
- Fig.3: eine vergrößerte Darstellung eines Teils der Fig.2 in betätigtem Zustand der Bremse, ohne daß ein Bremsmoment wirkt;
- Fig.4: eine Darstellung entsprechend Fig.3, wobei ein Bremsmoment nach links wirkt;
- Fig.5: eine Darstellung entsprechend Fig.3, wobei ein Bremsmoment nach rechts wirkt;
- Fig.6: besonders interessierende Einzelheiten eines Dämpfungselementes;
- Fig.7: einen Schnitt entlang der Linie A-A von Fig.6;
- Fig.8: ein weiteres Ausführungsbeispiel einer Vollbelag-Scheibenbremse;
- Fig.9: eine Draufsicht auf die beim Ausführungsbeispiel gemäß Fig. 8 verwendete Feder;
- Fig.10: ein weiteres Ausführungsbeispiel einer Vollbelag-Scheibenbremse mit zwei Blechfedern als Dämpfungselementen;
- Fig.11: eine Draufsicht auf die beim Ausführungsbeispiel gemäß Fig.10 verwendeten Blechfedern;
- Fig.12: ein weiteres Ausführungsbeispiel einer Betätigungseinrichtung für eine Vollbelag-Scheibenbremse, bei der federbelastete Reibscheiben als Dämpfungselement verwendet werden.

Die Vollscheibenbremse gemäß den Figuren wirkt auf eine abzubremsende Welle 10. Die Welle 10 durchsetzt ein Gehäuse 12, in dem die Bremse aufgenommen ist. Das Gehäuse 12 ist fest mit einem Fahrzeug verbunden.

Im Gehäuse 12 sind Reibflächen 12' ausgebildet, die beim Bremsen mit zugeordneten Reibflächen (siehe unten) in Eingriff kommen.

Auf der Welle 10 sind zwei Lamellen 14, 14' in bekannter Weise so befestigt, daß sie beim Bremsen eine Axialbewegung ausführen können, die ausreichend ist, um weiter unten näher beschriebene Reibflächen in Eingriff zu bringen. Hingegen sind die Lamellen 14, 14' in Umfangsrichtung nicht in bezug auf die Welle 10 drehbar, so daß sie bezüglich einer Drehbewegung starr mit der Welle 10 verbunden sind und somit Drehkräfte zwischen der Welle 10 und dem Gehäuse 12 übertragen können. Beispielsweise kann die Koppelung zwischen den Lamellen 14, 14' und der Welle 10 über Nut/Feder-Verbindungen erfolgen, wobei die Nuten und Federn in ihrer Längserstreckung parallel zu der Achse der Welle 10 ausgerichtet sind.

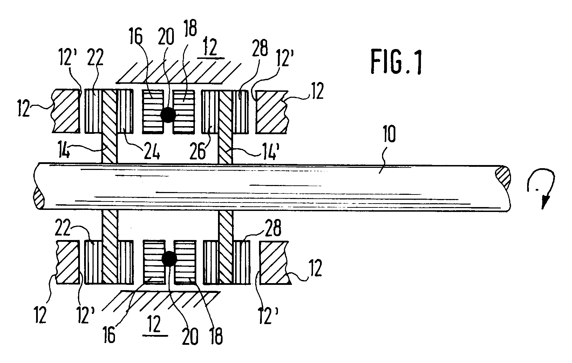

Im Gehäuse 12 der Bremse sind zwei Druckplatten 16, 18 gemäß Fig.1 angeordnet. Die Drehbewegung der Druckplatten 16, 18 in bezug auf das Gehäuse 12 ist auf einen kleinen Winkel (z.B. kleiner als 20°) begrenzt (siehe unten).

Zwischen den Druckplatten 16, 18 sind Kugeln 20 angeordnet. Bei einer Bremsung werden in bekannter Weise die Druckplatten 16, 18 relativ zueinander verdreht, wobei die Kugeln so auf Rampen laufen, daß die beiden Druckplatten 16, 18 in axialer Richtung voneinander entfernt werden. Dies ist als solches bekannt.

An der Lamelle 14 sind beidseits Reibbeläge 22 bzw. 24 befestigt, während an der Lamelle 14' beidseits Reibbeläge 26 bzw. 28 befestigt sind.

Beim Bremsen werden die beiden Druckplatten 16, 18 in der oben beschriebenen Weise in axialer Richtung voneinander entfernt, so daß die Reibbeläge 22, 24 bzw. 26, 28 der beiden Lamellen 14, 14' mit jeweils zugeordneten Reibflächen an den Druckplatten 16, 18 bzw. am Gehäuse 12 in Reibeingriff kommen. Die Reibflächen des Gehäuses 12 sind mit dem Bezugszeichen 12' versehen.

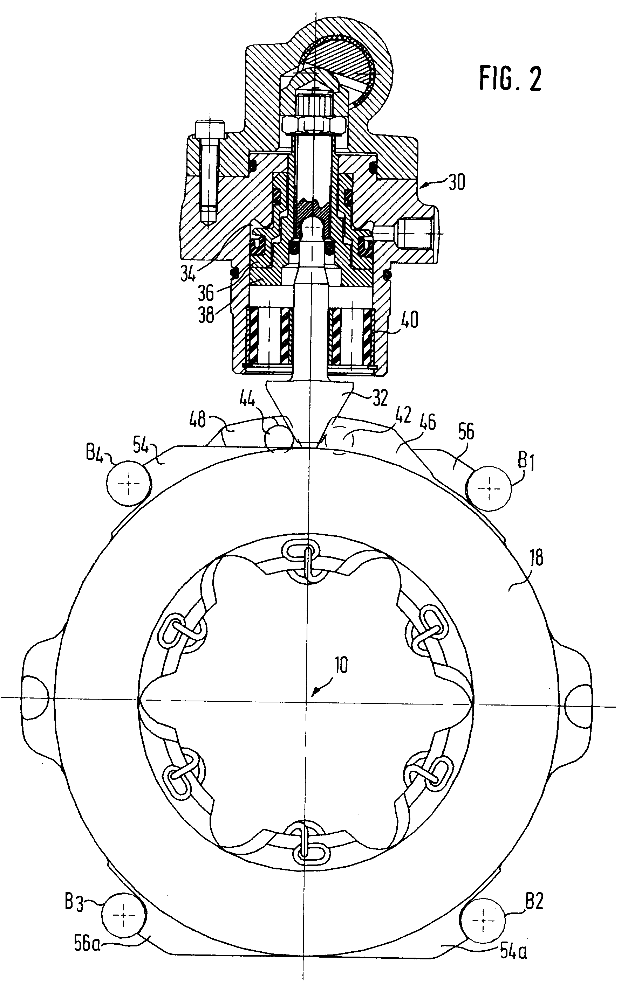

Durch die Reibung der Reibbeläge 24 und 26 erfolgt auch eine Übertragung von Drehkraft auf die beiden Druckplatten 16 bzw. 18. Damit diese Drehkraft auch zum Bremsen der Welle 10 in das ortsfeste Gehäuse 12 eingeleitet wird, sind in an sich bekannter Weise Nasen an den Druckplatten 16, 18 ausgebildet, die in Eingriff kommen mit Anschlägen, die am Gehäuse 12 vorgesehen sind. Dies zeigt Fig.2. An den Druckplatten sind nasenförmige Vorsprünge 54, 56, 54a, 56a ausgebildet. Jedem Vorsprung ist ein Bolzen B₁, B₂, B₃ bzw. B₄ zugeordnet. Die Bolzen erstrecken sich parallel zur Welle 10 durch das Gehäuse und dienen auch als axiale Führung für die Druckplatten. Die Bolzen haben also eine Doppelfunktion: zum einen dienen sie als Führung für die Druckplatten und zum anderen dienen sie zur Aufnahme des auf die Druckplatten durch Reibung übertragenen Bremsmoments. Dabei sind die nasenförmigen Vorsprünge und die als Anschläge dienenden Bolzen so angeordnet, daß in jeder Fahrtrichtung eine Übertragung von Bremsmoment von den Druckplatten auf das Gehäuse erfolgt.

Fig.2 zeigt somit eine Ansicht parallel zur Welle 10 auf die in Fig.1 rechts gezeichnete Druckplatte 18. Hinter der Druckplatte 18 befindet sich in Fig.2 die Druckplatte 16, die von der Druckplatte 18 weitgehend verdeckt ist.

Weiterhin zeigt Fig.2 im oberen Teil eine Betätigungseinrichtung, mit der die beiden Druckplatten 16, 18 gegensinnig zueinander um die Achse 10 verdrehbar sind, um eine axiale Spreizung der beiden Druckplatten zu erreichen und so Bremswirkung zu erzielen. Die Betätigungseinrichtung weist ein Gehäuse 30 auf, in dem als Betätigungselement ein Keil 32 radial in bezug auf die Achse 10 verschiebbar ist. Der Keil 32 wird hydraulisch und/oder mechanisch betätigt und bei einer Bremsung in den Figuren nach unten zwischen Rollen 42, 44 geschoben. Die Rollen 42, 44 sind in Ansätzen 46, 48 an den Druckplatten 18 bzw. 16 geführt. Wird der Keil 32 zwischen die Rollen 42, 44 gepreßt, dann werden die Druckplatten 18, 16 gegensinnig verdreht und mittels der in Fig.1 gezeigten Kugel/Rampen-Anordnung 20 zwischen den Druckplatten 16, 18 erfolgt eine Vergrößerung des axialen Abstandes der beiden Druckplatten, wodurch die anhand der Fig.1 erläuterten Lamellen 14, 14' abgebremst werden.

Die Bolzen B₁, B₂, B₃ und B₄ sind, wie gesagt, in einem ortsfesten Gehäuse befestigt. Die Bolzen übertragen das von den Druckplatten aufgenommene Bremsmoment in das ortsfeste Gehäuse.

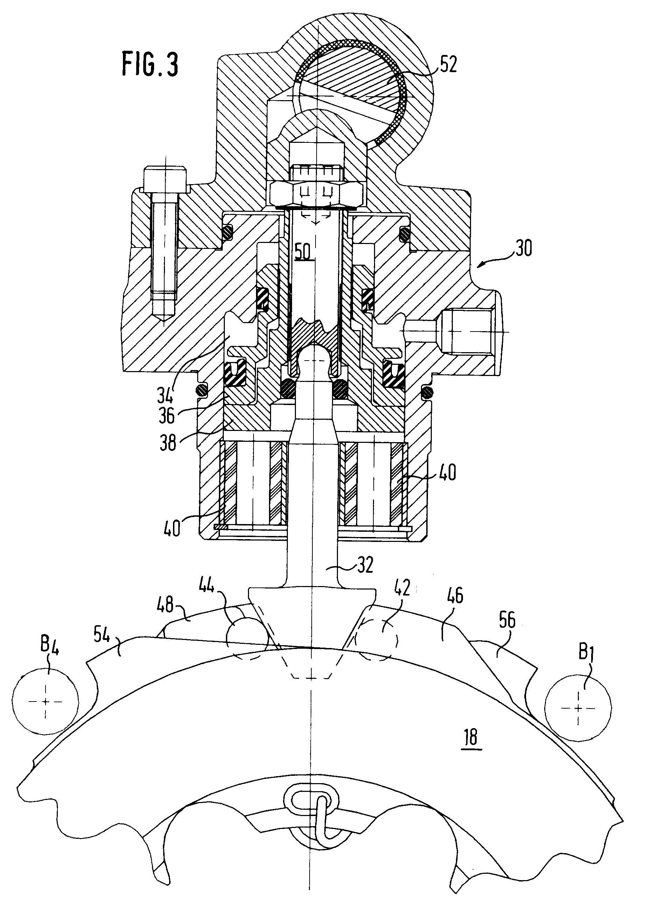

Von der in den Fig.2 und 3 durch die Druckplatte 18 abgedeckten hintere Druckplatte 16 sind in den Fig.2 und 3 folgende Teile zu erkennen: der Ansatz 48 sowie die Ansätze 56 und 56a.

Bei unbetätigter Bremse liegen alle vier Ansätze 54, 56, 54a, 56a praktisch spielfrei an den Bolzen B₁, B₂, B₃ bzw. B₄ an.

Fig.3 zeigt die Bremsanordnung gemäß Fig.2 in betätigtem Zustand, wobei allerdings kein durch Reibung bedingtes Bremsmoment erzeugt sein soll. Beispielsweise kann der Keil 32 der Betätigungseinrichtung im Gehäuse 30 hydraulisch verschoben werden. Alternativ ist auch eine mechanische Verschiebung des Keils 32 möglich, mittels der Drehwelle 52, die auf einen gegenüberliegenden Anschlag drückt, um den Keil 32 in den Figuren nach unten zu bewegen.

Bei einer hydraulischen Betätigung der Bremse wird Bremsflüssigkeit in den Ringzylinder 34 gepreßt, wodurch der Ringkolben 36 über eine Hülse 38 und einem mit dieser verschraubten Druckbolzen 50 den als Betätigungselement dienenden Keil 32 beaufschlagt. Die Gewinderverbindung zwischen dem Druckbolzen 50 und der Hülse 38 dient einer manuellen Nachstellung der Bremse bei Verschleiß.

Der Keil 32 verdreht, wie gesagt, die beiden Druckplatten 18, 16 gegeneinander. Die Fig.3 zeigt den Zustand der Bremse bei Betätigung, wobei allerdings kein Bremsmoment erzeugt wird, z.B. steht das Fahrzeug still.

Die Ansätze 54, 56 haben in diesem Zustand der Bremse erheblichen Abstand von den Bolzen B₁ bzw. B₄.

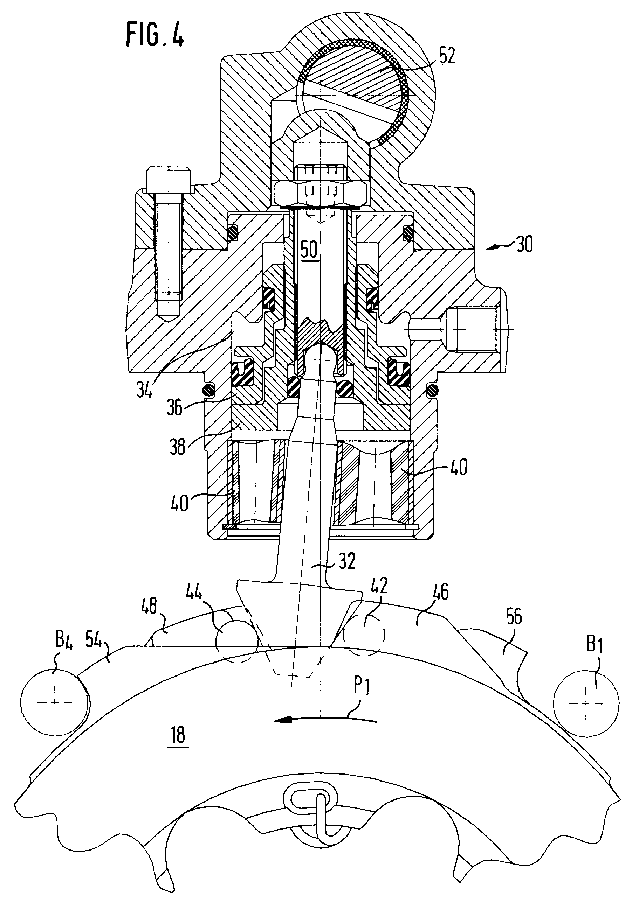

Erfolgt eine Bremsung während der Fahrt, entsteht bei Betätigung der Bremse ein Bremsmoment aufgrund einer Reibung der Lamellen. Dies zeigt Fig.4, bei der angenommen ist, daß sich das Fahrzeug in Vorwärtsrichtung bewegt, was durch den Pfeil P₁ angedeutet ist. Wie in Fig.4 zu erkennen ist, erzeugt das durch die Reibung bedingte Bremsmoment eine Kraft an den Druckplatten 16, 18, die in Fig.4 in Umfangsrichtung nach links gerichtet ist. Durch diese Kraft werden die Druckplatten nach links bewegt, bis der Ansatz 54 an den Bolzen B₄ anschlägt. Weiterhin schlägt der Ansatz 54a (Fig.2) an den Bolzen B₂ an. Bei Vorwärtsfahrt erfolgt an den Bolzen B₁ und B₃ kein Anschlag.

Dieses Anschlagen der Ansätze an die Bolzen verursacht störende und den Fahrer möglicherweise irritierende Geräusche.

Dies kann dadurch verhindert werden, daß eine Dämpfung im Bremssystem angeordnet wird. Hierzu ist vorgesehen, daß die Bewegung des Betätigungselementes 32 aus seiner radialen Mittellage mittels eines Dämpfungselementes in Umfangsrichtung (bezogen auf die Welle 10; Fig.1) durch ein Dämpfungselement abgefedert wird. Die Fig.2 bis 7 zeigen ein erstes Ausführungsbeispiel eines derartigen Dämpfungselementes 40.

Wie insbesondere anhand der Fig.4 zu erkennen ist, wird bei einer Bremsung das Betätigungselement 32 (hier als Keil ausgebildet) durch die Druckplatten 16, 18 bzw. die hiermit verbundenen Rollen 42 bzw. 44 mitgerissen. Um eine Drehbeschleunigung der Druckplatten beim Aufbau eines Bremsmomentes zu dämpfen und damit das Anschlaggeräusch zu reduzieren, wird das Betätigungselement 32 gedämpft abgestützt, so daß die in Umfangsrichtung wirkenden Kräfte nicht sofort zu einer plötzlichen Drehbeschleunigung der Druckplatten führen, sondern vielmehr zunächst zu einer Bewegung des Betätigungselementes 32 in Umfangsrichtung gegen eine Kraft führen. Das Betätigungselement 32 führt bei einer Bremsung somit nicht nur eine Radialbewegung aus, sondern auch eine Verkippung in Umfangsrichtung. Hierzu ist das Betätigungselement 32 hinreichend in Umfangsrichtung verkippbar gelagert, wie sich aus den Fig.2 bis 7 ergibt. Die Verkippung des Betätigungselementes 32 erfolgt gegen eine Federkraft, die das Dämpfungselement 40 erzeugt.

Somit wird bei einer Bremsung ein Teil des Bremsmomentes bereits über das Betätigungselement 32 abgefangen, wobei dieses Bremsmoment über das Dämpfungselement 40 in das Gehäuse 30 (ortsfest) abgeleitet wird. Der Verformungswiderstand des Dämpfungselementes 40 bestimmt den Anteil des vom Betätigungselement 32 aufgenommenen und in das Gehäuse abgeleiteten Bremsmomentes. Dasjenige Bremsmoment, das aufgrund der Elastizität des Dämpfungselementes 40 nicht in das Gehäuse 30 abgeleitet wird, beschleunigt die Druckplatten 16, 18, bis die Ansätze 54, 54a die jeweils zugeordneten Bolzen B₄ bzw. B₁ berühren. Somit wird dann der Hauptteil des Bremsmomentes über die Bolzen in das ortsfeste Gehäuse abgeleitet.

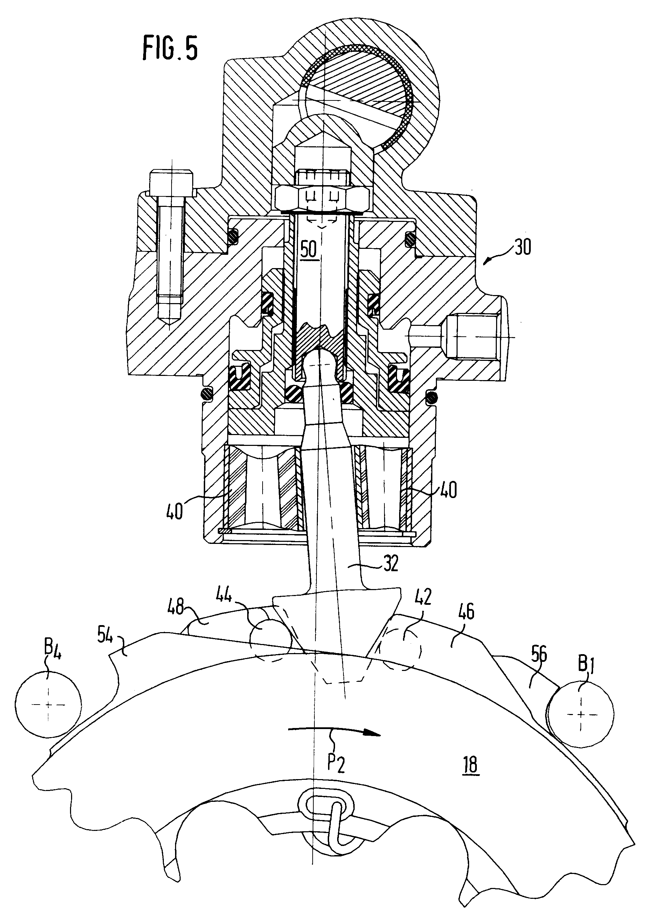

Fig.5 zeigt eine Bremsung in umgekehrter Fahrtrichtung (Rückwärtsfahrt), was durch den Pfeil P₂ angedeutet ist. Ansonsten sind die Verhältnisse analog den anhand der Fig.4 beschriebenen. Bei Rückwärtsfahrt schlagen die Ansätze 56, 56a gegen die zugeordneten Bolzen B₁ bzw. B₃. Auch hier wird ein Teil des Bremsmomentes vom Betätigungselement 32 gedämpft aufgenommen, wobei das Dämpfungselement 40 auf der im Vergleich zur Fig.4 gegenüberliegenden Seite zusammengedrückt wird.

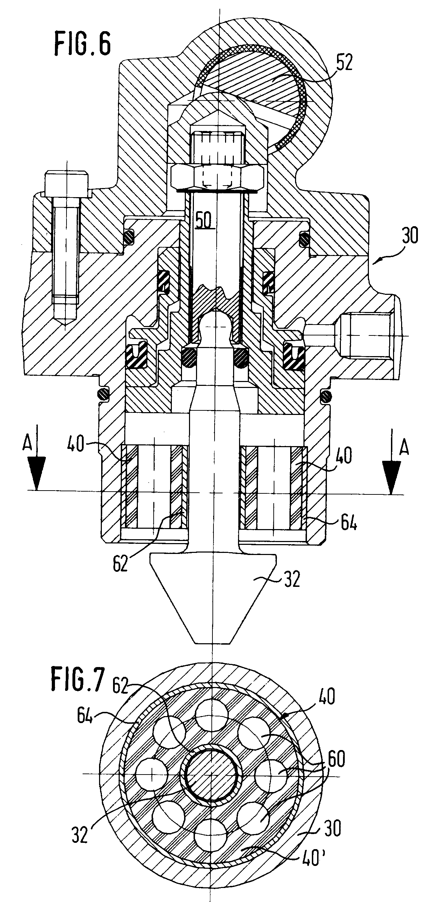

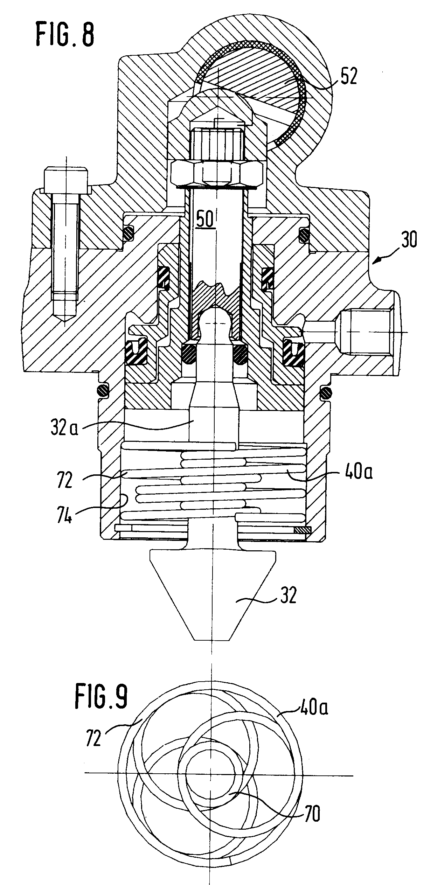

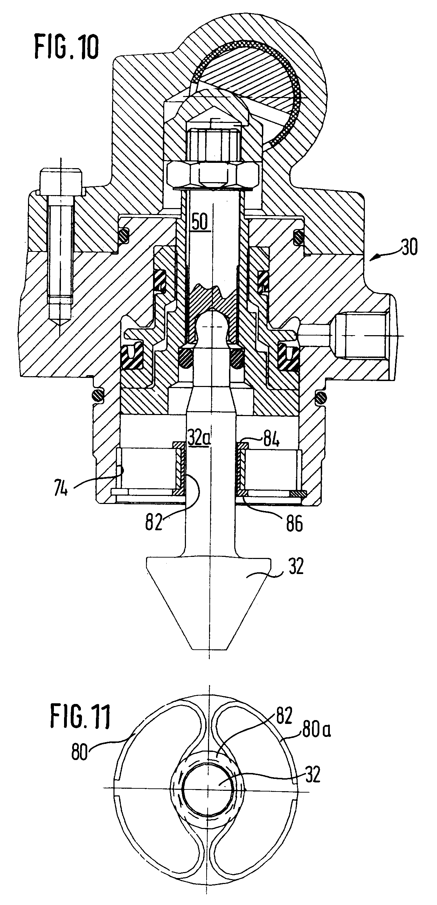

Die Fig.6 und 7 zeigen Einzelheiten des Dämpfungselementes 40. Zwischen zwei konzentrischen Metallhülsen 62, 64 ist ein Gummikörper 40' eingebettet. Um die Dauerhaltbarkeit des Gummikörpers 40' zu verbessern, sind mehrere Hohlräume 60 im Gummikörper vorgesehen, beim dargestellten Ausführungsbeispiel als Kranz von zur Längsachse des Betätigungselementes 32 parallelen, zylindrischen Hohlräumen.

Die Fig.8 und 9 zeigen eine Abwandlung des zuvor beschriebenen Ausführungsbeispiels dahingehend, daß statt des aus einem Gummikörper gebildeten Dämpfungselementes eine Feder 40a verwendet wird. Die wendelförmig mit unterschiedlichen Radien (also auch spiralförmig) gewickelte Feder 40a stützt sich einerseits in einer entsprechenden Ausnehmung 74 im Gehäuse 30 ab und andererseits umfaßt sie mit enger gewickelten Windungen einen Schaft 32a des Betätigungselementes 32. Die Fig.9 zeigt eine Draufsicht in Richtung der Längsachse des Betätigungselementes 32 auf die Drahtfeder 40a. Die Drahtfeder 40a gemäß Fig.9 ist somit vielfach spiral- und wendelförmig derart gewickelt, daß zumindest ein, vorzugsweise aber mehrere äußere Ringe 72 gebildet werden, die sich an der inneren Ausnehmung 74 im Gehäuse 30 abstützen. Durch engere Wicklung der Drahtfeder erzeugte innere Ringe 70 hingegen umfassen den Schaft 32a des Betätigungselementes 32, wobei der Schaft noch eine Bewegung in Richtung seiner Längsachse ausführen kann.

Durch Verformen der Feder 40a entsprechend einer Verformung des Gummikörpers 40' gemäß Fig.7 erfolgt die oben beschriebene Dämpfung der Bremskräfte und deren Aufteilung auf einerseits das Betätigungselement 32 und andererseits die Bolzen B₁ bis B₄.

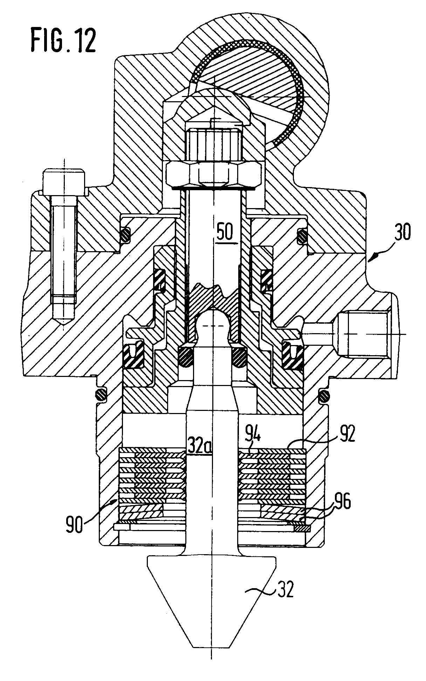

Die Fig.10 und 11 zeigen eine weitere Abwandlung der zuvor beschriebenen Dämpfungselemente. Beim Ausführungsbeispiel gemäß den Fig.10 und 11, wobei die Fig.11 eine Draufsicht in Richtung der Längsachse des Betätigungselementes 32 auf das Dämpfungselement zeigt, sind zwei Blechfedern 80, 80a vorgesehen, wobei eine Blechfeder 80 bei Bremsung in Vorwärtsrichtung dämpfend wirkt, während die andere Feder 80a gegenüberliegend angeordnet ist und bei Bremsung in Rückwärtsrichtung dämpfend wirkt. Eine Gleitbuchse 82 mit einem oberen Bund 84 und einem unteren Bund 86 verhindert eine direkte Reibung der Federn am Schaft 32a. Durch die Bünde 84, 86 werden die Federn 80, 80a festgehalten.

Fig.12 zeigt eine weitere Abwandlung des Dämpfungselementes, welches hier durch eine Vielzahl von Reibscheiben 92, 94 gebildet wird. Die Vielzahl von Reibscheiben 92, 94 wird durch Tellerfedern (beim dargestellten Ausführungsbeispiel zwei Stück) 96 in Richtung der Längsachse des Betätigungselementes 32 zusammengepreßt. Hierzu ist im Gehäuse 30 eine Ausnehmung vorgesehen, die als Anschlag für die obere Reibscheibe 92 dient. Wie sich aus Fig.12 ergibt, sind jeweils Reibscheiben 92, 94 radial in bezug auf die Längsachse des Betätigungselementes 32 gegeneinander versetzt, wobei jeweils ein Teil der Reibscheiben am Schaft 32a des Betätigungselementes 32 anliegt, während ein anderer Teil der Reibscheiben sich außen am Gehäuse 30 abstützt. Die Reibung zwischen den Reibscheiben 92, 94, deren Oberfläche entsprechend ausgebildet ist, bestimmt die Dämpfungskonstante des Dämpfungselementes 90. Weiterhin wird die Dämpfungskonstante des Dämpfungselementes 90 bestimmt durch die axiale Preßkraft der Tellerfedern 96.

## Patentansprüche

1. Scheibenbremse mit zumindest einer in einem Bremsgehäuse (12) auf einer Achse (10) umlaufenden Bremslamelle (14, 14'), die mittels zumindest einer axial verschiebbaren Druckplatte (16, 18) in bremsenden Reibeingriff mit in bezug auf das Gehäuse (12) ortsfesten Reibflächen (12') bringbar ist, wobei Bremskraft über Anschläge (B₁, B₂, B₃, B₄) von der Druckplatte (16, 18) in das Gehäuse (12) eingeleitet wird, und mit einem Betätigungselement (32), das die axiale Verschiebung der Druckplatte bewirkt,
dadurch **gekennzeichnet,** daß zwischen dem Betätigungselement (32) und dem Gehäuse (12) ein Dämpfungselement (40; 40a; 80, 80a; 90) angeordnet ist.

2. Scheibenbremse nach Anspruch 1,
dadurch **gekennzeichnet,** daß das Betätigungselement (32) als Keil ausgebildet ist, der zwei Druckplatten (16, 18) gegensinnig zueinander verdreht.

3. Scheibenbremse nach Anspruch 2,
dadurch **gekennzeichnet,** daß der Keil bei einer Verschiebung der Druckplatte (16, 18) in bezug auf die Achse (10) eine radiale Bewegung ausführt und daß das Dämpfungselement (40; 40a, 80, 80a; 90) den Keil gegen eine Bewegung in Umfangsrichtung federnd abstützt.

4. Scheibenbremse nach einem der vorhergehenden Ansprüche,
dadurch **gekennzeichnet,** daß als Dämpfungselement ein massiver Körper aus elastischem Material vorgesehen ist, in dem insbesondere Ausnehmungen (60) vorgesehen sind.

5. Scheibenbremse nach einem der Ansprüche 1 bis 3,
dadurch **gekennzeichnet,** daß als Dämpfungselement eine spiral- und wendelförmig gewundene Feder (40a, 70, 72) vorgesehen ist.

6. Scheibenbremse nach einem der Ansprüche 1 bis 3,
dadurch **gekennzeichnet,** daß als Dämpfungselement zumindest zwei einander gegenüberliegende Federn (80, 80a) vorgesehen sind.

7. Scheibenbremse nach einem der Ansprüche 1 bis 3,
dadurch **gekennzeichnet,** daß als Dämpfungselement Reibscheiben (92, 94) vorgesehen sind.
